# EUROPÄISCHE PATENTSCHRIFT

(11) **EP 0 998 776 B1**
(45) Veröffentlichungstag und Bekanntmachung des Hinweises auf die Patenterteilung: **27.02.2002**
(21) Anmeldenummer: 98945025.9
(22) Anmeldetag: 22.07.1998
(51) Int. Cl.: H02H 11/00, H02H 7/08

(54) **STEUERSCHALTUNG FÜR EINEN GLEICHSTROMMOTOR**
CONTROL CIRCUIT FOR A DIRECT CURRENT MOTOR
CIRCUIT DE COMMANDE POUR MOTEUR A COURANT CONTINU

(30) Priorität: 25.07.1997 DE 19732094
(43) Veröffentlichungstag der Anmeldung: 10.05.2000
(73) Patentinhaber: ROBERT BOSCH GMBH, 70442 Stuttgart (DE)
(72) Erfinder: KESSLER, Martin, D-77815 Bühl (DE); PREIS, Karl-Heinrich, D-77830 Bühlertal (DE)
(86) Internationale Anmeldenummer: DE9802058
(87) Internationale Veröffentlichungsnummer: WO9905763

(56) Entgegenhaltungen:
- US-A- 5 012 381
- US-A- 5 142 433

## Beschreibung

### Stand der Technik

Die Erfindung bezieht sich auf eine Steuerschaltung für einen Gleichstrommotor, nach dem Oberbegriff des Anspruchs 1.

Eine derartige Steuerschaltung ist aus US-A-5 012 381 bekannt. Eine dabei verwendbare Verpolschutzeinrichtung ist an sich in der DE 39 24 499 A1, insbesondere in Verbindung mit der darin angegebenen Figur 4D, als bekannt ausgewiesen. Bei Verwendung einer derartigen Verpolschutzeinrichtung bei einem mit einer Batteriespannung gespeisten Gleichstrommotor wird bei Falschpolung der Batteriespannung ein Kurzschluß über die Freilaufdiode und eine Inversdiode eines für eine getaktete Steuerung des Gleichstrommotors vorgesehenen Leistungs-Mos-Fets verhindert. Ferner wird durch die Verpolschutzeinrichtung vermieden, daß bei Verpolung ein in der Steuerschaltung vorgesehener Elektrolytkondensator zerstört wird. Bei einer bekannten Steuerschaltung wird der Verpolschutz in die Zuleitung oder Ableitung der Motor-Stromversorgung geschaltet. Daher muß die herkömmliche Verpolschutzeinrichtung für eine entsprechend hohe Verlustleistung ausgelegt sein.

Die Maßnahme, eine Verpolschutzeinrichtung eines Gleichstrommotors aus dem Stromkreis des Motors herauszuverlagern und ausschließlich in den Stromkreis der Freilaufdiode zu legen (so daß die Verpolschutzeinrichtung im Normalbetrieb nicht den Motorstrom trägt), ist im einschlägigen Stand der Technik auch aus US-A-5 142 433 bekannt, siehe z.B. dortige Figur 1 (Verpolschutzdiode 17 im Stromkreis der Freilaufdioden 14 und 15, um der Verpolschutzdiode den normalen Motorstrom zu ersparen, Spalte 1, Zeilen 58 bis 63 des US-Patents). Ferner umfaßt die Schaltungsanordnung nach Figur 1 der US-A-5 142 433 einen Kondensator 18 zum Aufnehmen von Stromstößen (Spalte 4, Zeilen 30/31). Der Kondensator 18 liegt parallel zur Verpolschutzdiode 17 und - wenn der Transistorschalter 13 leitet - auch parallel zum Gleichstrommotor 19. Die Verpolschutzdiode 17 verhindert, daß bei Verpolung der Batterie 11 diese über die Freilaufdioden 14 und 15 kurzgeschlossen wird. Jedoch verhindert die Verpolschutzdiode 17 nicht, daß bei Verpolung der Batterie 11 der Kondensator 18 umgepolt wird. Der Kondensator 18 darf somit kein Elektrolytkondensator sein. Die Verpolschutzeinrichtung 17 der US-A-5 142 433 liegt nämlich nicht im Stromkreis des Kondensators 18.

### Vorteile der Erfindung

Der Erfindung liegt die Aufgabe zugrunde, eine Steuerschaltung der eingangs genannten Art bereitzustellen, bei der die Verlustleistung des Verpolschutzes verringert wird.

Diese Aufgabe wird mit den Merkmalen des Anspruchs 1 gelöst. Hiernach ist also vorgesehen, daß die Verpolschutzeinrichtung in den Stromkreis des Elektrolytkondensators und der Freilaufdiode geschaltet ist. Durch die Anordnung der Verpolschutzeinrichtung in dem Strompfad des Elektrolytkondensators und der Freilaufdiode werden diese gefährdeten Bauelemente gegen Zerstörung bei Verpolung geschützt. Da der durch die Verpolschutzeinrichtung fließende Strom wesentlich geringer ist als derjenige im Versorgungsstromkreis des Motors, kann die Verpolschutzeinrichtung auch für eine entsprechend niedrigere Verlustleistung ausgelegt werden. Die Verlustleistung der Verpolschutzeinrichtung wird z. B. in der Größenordnung eines Faktors 10 oder höher verringert.

Eine einfache, sicher funktionierende Ausbildung des Verpolschutzes ergibt sich dadurch, daß der Transistorschalter mit der Diode als Leistungs-Mos-Fet ausgebildet ist.

Eine vorteilhafte Ankopplung der Verpolschutzeinrichtung besteht darin, daß der Transistorschalter mit der Diode als n-Kanal Leistungs-Mos-Fet ausgebildet ist und mit seinem Drain-Anschluß an den Minus-Anschluß des Elektrolytkondensators und an die Anode der Freilaufdiode angeschlossen ist, die mit ihrer Kathode an der positiven Seite des Gleichstrommotors liegt, daß der Source-Anschluß an die negative Seite des Gleichstrommotors angeschlossen ist und daß der Gate-Anschluß über einen Widerstand an eine positive Spannung angeschlossen ist. Zum Schutz des Leistungs-Mos-Fets ist dabei vorteilhaft vorgesehen, daß zwischen dem Drain- und dem Gate-Anschluß eine Zenerdiode angeschlossen ist, deren Anode an dem Drain-Anschluß und deren Kathode an dem Gate-Anschluß liegt.

Eine weitere günstige Anordnung der Verpolschutzeinrichtung besteht darin, daß der Transistorschalter mit der Diode als n-Kanal Leistungs-Mos-Fet ausgebildet ist und mit seinem Drain-Anschluß mit der positiven Seite des Gleichstrommotors gekoppelt ist, daß der Source-Anschluß an den Plus-Anschluß des Elektrolytkondensators und an die Kathode der Freilaufdiode gekoppelt ist, die mit ihrer Anode an der negativen Seite des Gleichstrommotors liegt.

Der Leistungs-Mos-Fet wird invers betrieben, da er eine integrierte Diode enthält. Beim Normalbetrieb, d.h. nicht invertierten Betrieb, würde diese Diode im Verpolungsfall die Verpolschutzeinrichtung kurzschließen.

Für die Ansteuerung des Gleichstrommotors und einen weiteren Schutz kann weiterhin vorgesehen sein, daß der Gleichstrommotor über einen weiteren Leistungs-Mos-Fet getaktet angesteuert wird und daß eine Ansteuereinheit des weiteren Leistungs-Mos-Fets bei Verpolung mittels der Verpolschutzeinrichtung abgeschaltet wird. Durch die Verpolschutzeinrichtung werden auch der weitere Leistungs-Mos-Fet sowie Ansteuerkomponenten geschützt. Der bei Verpolung auftretende Rückwärtslauf des Gleichstrommotors ist unschädlich.

Die Erfindung wird nachfolgend anhand von Ausführungsbeispielen unter Bezugnahme auf die Zeichnungen näher erläutert. Es zeigen:
- Fig. 1: ein erstes Ausführungsbeispiel einer Ansteuerschaltung für einen Gleichstrommotor mit Verpolschutz, wobei eine Schalteinrichtung in dessen Pluszweig liegt, und
- Fig. 2: ein weiteres Ausführungsbeispiel für eine Ansteuerschaltung eines Gleichstrommotors mit Verpolschutz, wobei eine Schalteinrichtung in dessen Minuszweig liegt.

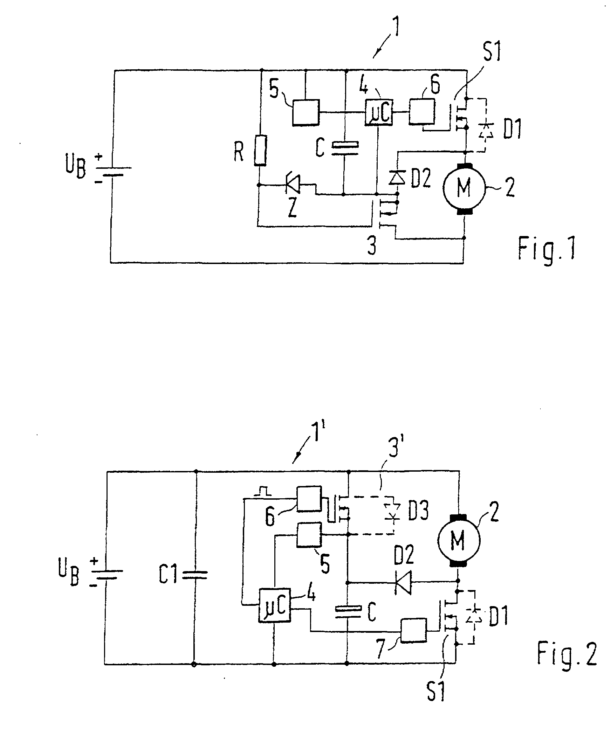

Wie Fig. 1 zeigt, ist an eine Batteriespannung U_{B} ein Gleichstrommotor 2, getaktet über eine Schalteinrichtung S1 mit einer integrierten Diode D1, angeschlossen. Dem Gleichstrommotor 2 mit der Schalteinrichtung S1 ist ein Elektrolytkondensator C über eine Verpolschutzeinrichtung 3 in Form eines invers betriebenen n-Kanal Leistungs-Mos-Fets parallel geschaltet. Dem Gleichstromotor 2 selbst ist weiterhin eine Freilaufdiode D2 ebenfalls über die Verpolschutzeinrichtung 3 parallel geschaltet, wobei die Freilaufdiode D2 mit ihrer Kathode auf der positiven Seite des Gleichstrommotors 2 und mit ihrer Anode an der Minus-Seite des Elektrolytkondensators C und dem Drain-Anschluß des Leistungs-Mos-Fets 3 angeschlossen ist. Der Source-Anschluß des Leistungs-Mos-Fets 3 liegt an der negativen Seite des Gleichstrommotors 2, die mit dem Minuspol der Batteriespannung U_{B} verbunden ist. Der Gate-Anschluß des Leistungs-Mos-Fets 3 liegt über einen Widerstand R an der positiven Batteriespannung U_{B}. Zwischen dem Drain-Anschluß und dem Gate-Anschluß liegt eine Zenerdiode Z mit ihrer Kathode an dem Gate-Anschluß und mit ihrer Anode an dem Drain-Anschluß.

Weiterhin ist ein Schaltungsabschnitt mit einem Mikrocontroller 4, einer Versorgungsspannungsschaltung 5 und einer Bootstrapschaltung 6 in der Weise an der Verpolschutzeinrichtung 3 angeschlossen, daß die Versorgungsspannungsschaltung 5 dem den Mikrocontroller 4 nicht mehr versorgt, wenn der Schalter der Verpolschutzeinrichtung 3 geöffnet ist, d.h. eine Verpolung vorliegt. Der Mikrocontroller 4 steuert die Schalteinrichtung S1 über einen Treiber.

Im Normalbetrieb ist der Schalter der Verpolschutzeinrichtung 3 in Form des als Schalteinheit dienender Leistungs-Mos-Fets geschlossen. Wird die Batteriespannung U_{B} falsch gepolt, so sperrt der Leistungs-Mos-Fet 3, d. h. die Schalteinheit wird geöffnet. Eine der Drain-Source-Strecke parallel geschaltete integrierte Inversdiode liegt dabei ebenfalls in Sperrichtung. Dadurch wird der Strompfad durch den Elektrolytkondensator C und die Freilaufdiode D2 unterbrochen, und es fließt lediglich ein Rückwärtsstrom durch den Gleichstrommotor 2, der für diesen jedoch unschädlich ist. Da die Verpolschutzeinrichtung 3 außerhalb des Versorgungsstromkreises des Gleichstrommotors 2 in einem Stromkreis angeordnet ist, durch den bei richtiger Polung wesentlich weniger Strom fließt, nämlich nur der Strom durch den Elektrolytkondensator C und der Freilaufstrom, wird in der Verpolschutzeinrichtung 3 eine entsprechend geringe, durch den Bahnwiderstand zwischen Drain- und Source-Anschluß bedingte Verlustleistung erzeugt.

Der Aufbau gemäß Fig. 2, der ebenfalls eine Steuerschaltung 1' für den Gleichstrommotor 2 über eine getaktete Schalteinrichtung S1 mit parallel geschalteter integrierter Diode D1 zeigt, ist ähnlich wie der in Fig. 1 gezeigte Aufbau und ist in der Wirkungsweise entsprechend. Im Unterschied zu dem Aufbau nach Fig. 1 ist die Schalteinheit 3', die vorzugsweise ebenfalls als invers betriebener n-Kanal Leistungs-Mos-Fet mit integrierter Inversdiode D3 ausgebildet ist, zwischen dem Plus-Anschluß des Elektrolytkondensators C und der positiven Batteriespannung U_{B} angeschlossen. An den Plus-Anschluß des Elektrolytkondensators C ist die Freilaufdiode D2 mit ihrer Kathode angeschlossen, die mit ihrer Anode auf der negativen Seite des Gleichstrommotors 2 zwischen diesem und der Schalteinrichtung S1 angeschlossen ist. Ein nicht notwendiger, Entstörzwecken dienender weiterer Kondensator C1 in Form eines Folienkondensators liegt zwischen der positiven und der negativen Versorgungsleitung. Ein entsprechender Kondensator kann auch bei dem Ausführungsbeispiel gemäß Fig. 2 vorgesehen sein.

Ein Schaltungsabschnitt mit einem Mikrocontroller 4, einer Versorgungsspannungsschaltung 5 und einer Bootstrapschaltung 6 ist an der Verpolschutzeinrichtung in Form der Schalteinheit 3' in der Weise angeschlossen, daß die Versorgungsspannungsschaltung 5 den Mikrocontroller 4 nicht mehr versorgt, wenn der Schalter der Schalteinheit 3' geöffnet ist, d. h. wenn, entsprechend den Ausführungen anhand Fig. 1, eine Verpolung vorliegt. Der Mikrocontroller 4 steuert die Schalteinrichtung S1 über einen Treiber 7 zum Betreiben des Gleichstrommotors 2 beispielsweise mit einer Taktfrequenz von 20 KHz in Pulsweitenmodulation.

Bei Verpolung der Batteriespannung U_{B} wird also der Schalter der Schalteinheit 3' geöffnet bzw. sperrt der Leistungs-Mos-Fet. Dadurch wird ein Strom durch den Elektrolytkondensator C und die Freilaufdiode D2 vermieden, so daß diese geschützt werden. Ferner wird der Mikrocontroller 4 nicht mehr mit Spannung versorgt, so daß die Ansteuerung der Schalteinrichtung S1 abgeschaltet wird. Auch mit diesem Aufbau wird somit ein sicherer Schutz der gefährdeten Bauteile bei geringer Verlustleistung der Verpolschutzeinrichtung erzielt.

## Patentansprüche

1. Steuerschaltung für einen Gleichstrommotor (2) mit einer außerhalb des Versorgungsstromkreises des Gleichstrommotors (2) angeordneten Verpolschutzeinrichtung (3), die einen Transistorschalter mit einer diesem parallel geschalteten Diode (D3) aufweist und zum einen in den Stromkreis einer Freilaufdiode (D2) geschaltet ist,
**dadurch gekennzeichnet,**
**dass** die Verpolschutzeinrichtung (3) zum anderen in den Stromkreis eines dem Gleichstrommotor (2) parallel geschalteten Elektrolytkondensators (C) geschaltet ist.

2. Steuerschaltung nach Anspruch 1,
**dadurch gekennzeichnet,**
**dass** der Transistorschalter mit der Diode (D3) als Leistungs-Mos-Fet (3) ausgebildet ist.

3. Steuerschaltung nach Anspruch 2,
**dadurch gekennzeichnet,**
**daß** der Transistorschalter mit der Diode (D3) als n-Kanal Leistungs-Mos-Fet (3) ausgebildet ist und mit seinem Drain-Anschluß an den Minus-Anschluß des Elektrolytkondensators (C) und an die Anode der Freilaufdiode (D2) angeschlossen ist, die mit ihrer Kathode an der positiven Seite des Gleichstrommotors (2) liegt,
**daß** der Source-Anschluß an die negative Seite des Gleichstrommotors (2) angeschlossen ist und
**daß** der Gate-Anschluß über einen Widerstand an eine positive Spannung angeschlossen ist.

4. Steuerschaltung nach Anspruch 3,
**dadurch gekennzeichnet,**
**daß** zwischen dem Drain- und dem Gate-Anschluß eine Zenerdiode (Z) angeschlossen ist, deren Anode an dem Drain-Anschluß und deren Kathode an dem Gate-Anschluß liegt.

5. Steuerschaltung nach Anspruch 2,
**dadurch gekennzeichnet,**
**daß** der Transistorschalter mit der Diode (D3) als n-Kanal Leistungs-Mos-Fet (3) ausgebildet ist und mit seinem Drain-Anschluß mit der positiven Seite des Gleichstrommotors (2) gekoppelt ist,
**daß** der Source-Anschluß an den Plus-Anschluß des Elektrolytkondensators (C) und an die Kathode der Freilaufdiode (D2) gekoppelt ist, die mit ihrer Anode an der negativen Seite des Gleichstrommotors (2) liegt.

6. Steuerschaltung nach Anspruch 2,
**dadurch gekennzeichnet,**
**daß** der Leistungs-Mos-Fet (3) invers betrieben wird.

7. Steuerschaltung nach einem der vorhergehenden Ansprüche,
**dadurch gekennzeichnet,**
**daß** der Gleichstrommotor (2) über einen weiteren Leistungs-Mos-Fet (S1, D1) getaktet angesteuert wird und
**daß** eine Ansteuereinheit (µC) des weiteren Leistungs-Mos-Fets (S1, D1) bei Verpolung mittels der Verpolschutzeinrichtung (3, D3) abgeschaltet wird.

## Claims

1. Control circuit for a DC motor (2) having an incorrect-polarity protection device (3) which is arranged outside the supply circuit of the DC motor (2) and has a transistor switch with a diode (D3) connected in parallel with it and, firstly, is connected in the circuit of a freewheeling diode (D2),
**characterized**
**in that** the incorrect-polarity protection device (3) is, secondly, connected in the circuit of an electrolytic capacitor (C) connected in parallel with the DC motor (2).

2. Control circuit according to Claim 1,
**characterized**
**in that** the transistor switch is configured with the diode (D3) as a power MOSFET (3).

3. Control circuit according to Claim 2,
**characterized**
**in that** the transistor switch is configured with the diode (D3) as an n-channel power MOSFET (3) and its drain connection is connected to the negative connection of the electrolytic capacitor (C) and to the anode of the freewheeling diode (D2), whose cathode is connected to the positive side of the DC motor (2),
**in that** the source connection is connected to the negative side of the DC motor (2), and
**in that** the gate connection is connected via a resistor to a positive voltage.

4. Control circuit according to Claim 3,
**characterized**
**in that** a zener diode (Z) is connected between the drain connection and the gate connection, with its anode being connected to the drain connection, and its cathode being connected to the gate connection.

5. Control circuit according to Claim 2,
**characterized**
**in that** the transistor switch is configured with the diode (D2) as an n-channel power MOSFET (3), and its drain connection is coupled to the positive side of the DC motor (2), and
**in that** the source connection is coupled to the positive connection of the electrolytic capacitor (C) and to the cathode of the freewheeling diode (D2), whose anode is connected to the negative side of the DC motor (2).

6. Control circuit according to Claim 2,
**characterized**
**in that** the power MOSFET (3) is operated in the inverse mode.

7. Control circuit according to one of the preceding claims,
**characterized**
**in that** the DC motor (2) is driven in a pulsed manner via a further power MOSFET (S1, D1), and
**in that** a drive unit (µC) for the further power MOSFET (S1, D1) is switched off by means of the incorrect-polarity protection device (3, D3) if the polarity is incorrect.

## Revendications

1. Circuit de commande pour un moteur à courant continu (2) avec, monté à l'extérieur du circuit d'alimentation du moteur (2), un dispositif (3) de protection contre l'inversion des pôles qui comporte un commutateur à transistor sur lequel une diode (D3) est montée en parallèle, et qui est monté d'abord dans le circuit d'une diode à passage libre (D2),
**caractérisé en ce que**
le dispositif de protection contre l'inversion (3) est monté par ailleurs dans le circuit d'un condensateur électrolytique (C) monté en parallèle au moteur à courant continu (2).

2. Circuit de commande selon la revendication 1,
**caractérisé en ce que**
le commutateur à transistor avec la diode (D3) est constitué par un transistor de puissance à effet de champ de type MOS (3).

3. Circuit de commande selon la revendication 2,
**caractérisé en ce que**
- le commutateur à transistor avec la diode (D3) est un transistor de puissance à effet de champ de type MOS (3) à canal - n et son raccord de drain est relié au raccord moins du condensateur (C) et à l'anode de la diode à passage libre (D2), dont la cathode est reliée au côté positif du moteur à courant continu (2),
- le raccord de source est relié au côté négatif du moteur (2), et
- le raccord de porte est relié par une résistance à la tension positive.

4. Circuit de commande selon la revendication 3,
**caractérisé en ce qu'**
entre les raccords de drain et de porte est montée une diode Zener (Z) dont l'anode est reliée au raccord de drain et la cathode au raccord de porte.

5. Circuit de commande selon la revendication 2,
**caractérisé en ce que**
- le commutateur à transistor avec la diode (D3) est un transistor de puissance à effet de champ de type MOS à canal - n, et son raccord de drain est relié au côté positif du moteur à courant continu (2),
- le raccord de source est relié au raccord plus du condensateur (C) et à la cathode de la diode à passage libre (D2) dont l'anode est reliée au côté négatif du moteur (2).

6. Circuit de commande selon la revendication 2,
**caractérisé en ce que**
le transistor de puissance à effet de champ de type MOS (3) fonctionne en sens inverse.

7. Circuit de commande selon l'une des revendications précédentes,
**caractérisé en ce que**
- le moteur à courant continu (2) est commandé en cadence par un autre transistor de puissance à effet de champ de type MOS (S1, D1),
- une unité de commande (µC) de cet autre transistor (S1, D1) est, en cas d'inversion des pôles, coupée par l'intermédiaire du dispositif (3, D3) de protection contre l'inversion des pôles.
